# EUROPÄISCHE PATENTSCHRIFT

(11) **EP 2 414 707 B1**
(45) Veröffentlichungstag und Bekanntmachung des Hinweises auf die Patenterteilung: **01.05.2013**
(21) Anmeldenummer: 10710847.4
(22) Anmeldetag: 25.03.2010
(51) Int. Cl.: F16H 61/00, F15B 11/028, F15B 13/043, F15B 13/042

(54) **HYDRAULISCHE GETRIEBESTEUERUNG**
HYDRAULIC TRANSMISSION CONTROL
COMMANDE DE BOÎTE DE VITESSES HYDRAULIQUE

(30) Priorität: 01.04.2009 DE 102009002105
(43) Veröffentlichungstag der Anmeldung: 08.02.2012
(73) Patentinhaber: ZF Friedrichshafen AG, 88038 Friedrichshafen (DE)
(72) Erfinder: SCHMIDT, Thilo, 88074 Meckenbeuren (DE); GIERER, Georg, 88079 Kressbronn (DE); POPP, Christian, 88079 Kressbronn (DE)
(86) Internationale Anmeldenummer: PCT/EP2010/053889
(87) Internationale Veröffentlichungsnummer: WO 2010/112390

(56) Entgegenhaltungen:
- EP-A2- 2 019 234
- WO-A1-2006/097209
- WO-A1-2006/097295
- WO-A1-2008/049735
- DE-A1-102005 012 586
- DE-A1-102007 020 346

## Beschreibung

Die Erfindung betrifft eine hydraulische Getriebesteuerung nach dem Oberbegriff des Patentanspruchs 1, wie offenbart in der WO 2006/097209 A1.

In hydraulisch betätigten Automatgetrieben erfolgt bekannterweise die hydraulische Ansteuerung von Getriebeschaltelementen, wie beispielsweise hydraulisch betätigten Kupplungen, mittels Druckregelventilen.

Ein mögliches Prinzip zur Druckregelung ist das so genannte Vorsteuerprinzip. Hierbei wandelt ein als elektrisches Drucksteuerventil wirksames Vorsteuerventil das elektrische Signal einer elektronischen Getriebesteuerung in einen vom Systemdruck verschiedenen (niedrigeren) Druck um. Das Drucksignal des Vorsteuerventils, der so genannte Vorsteuerdruck, gelangt durch einen Vorsteuerkanal zu einem Druckregelventil, mittels welchem dann der Vorsteuerdruck in ein höheres Drucksignal verstärkt wird, so dass das Schaltelement mit einem entsprechenden Arbeitsdruck und Volumenstrom zu dessen Befüllung versorgt wird.

Die Druckregelung (Modulation) der beispielsweise als Druckreduzierventile ausgeführten Vorsteuerventile erfolgt durch einen hydraulischen Schieber, der seinen Arbeitsdruck dadurch einstellt, dass der Schieber zwischen einem hohen Zulaufdruck und einem niedrigen Tankdruck moduliert. Eine solche Steuervorrichtung eines Getriebes ist in der WO 2006/097209 A1 offenbart.

Ist ein Getriebeschaltelement im nicht betätigten Zustand, d. h. nicht von einem Arbeitsdruck beaufschlagt und mit dem unter Umgebungsdruck stehenden Tank oder Getriebegehäuse verbunden, können sich die Getriebeschaltelemente und die zu diesen führenden Kanäle entleeren, bzw. kann sich Luft aus dem Arbeitsmedium ausscheiden. Die Folge ist eine lange Befüllzeit und damit eine lange Schaltzeit der Kupplung. Zudem ist die Regelgüte des Arbeitsdrucks schlecht, welcher hohe Druckschwankungen aufweist. Die Luftausscheidungen unterliegen erheblichen Streuungen und Wechselwirkungen, die mittels der Getriebesoftware nur unzureichend in Form eines Modells abgebildet bzw. bei der Ansteuerung der Schaltelemente berücksichtigt werden können.

Die DE102007020346A1 zeigt eine solche hydraulische Getriebesteuerung, bei welcher das Ansammeln von Luft in einem nicht betätigten Kolbenraum eines Getriebeschaltelementes vermieden wird, indem der Kolbenraum mit einem Flüssigkeitsreservoir verbunden wird.

Um Luftausscheidungen und Entleerung der Getriebeschaltelemente zu verhindern, wird im nicht betätigten Zustand der Druck in einem Getriebeschaltelement auf ein niedriges Druckpotenzial eingestellt. Dieses Druckpotenzial, das nur geringfügig höher ist als der Umgebungsdruck des Getriebes, wird nachfolgend Vorbefülldruck bezeichnet. Durch die Vorbefüllung der Kupplungskanäle werden die Luftausscheidungen und damit die Streuungen bei der Ansteuerbarkeit erheblich reduziert, so dass nach dem derzeitigen Stand der Technik hydraulisch betätigte Kupplungssysteme über eine Kupplungsvorbefüllung verfügen. Eine solche Getriebesteuerung ist aus der DE10239951A1 bekannt.

Der Vorteil der mit dem Vorsteuerdruck beaufschlagten Kanäle, nachfolgend als Vorsteuerkanäle bezeichnet, besteht im Allgemeinen in deren Anordnung innerhalb der hydraulischen Steuerung. Durch die Einbaulage der hydraulischen Steuerung im Ölsumpf ist ein Leerlaufen der Vorsteuerkanäle aufgrund der Schwerkraft somit ausgeschlossen. Es ergeben sich lediglich Luftabscheidungen, die im Neuzustand bei der Montage der hydraulischen Steuerung eingeschlossen werden und nach der Inbetriebnahme des Getriebes nicht mehr auftreten. Bei hydraulischen Steuerungen die sich nicht im Ölsumpf des Getriebes befinden, stellt sich jedoch das Problem, dass eine zumindest teilweise Entleerung der Vorsteuerkanäle erfolgt, insbesondere dann, wenn das Getriebe steht und die Getriebepumpe keinen Druck liefert.

Zusätzlich zeigt sich nachteiliger Weise bei längerer Nichtbetätigung des Vorsteuerventils, dass sich Luft auch dann in den Vorsteuerkanälen abscheidet, wenn sich die Ölpumpe in Betrieb befindet, wobei hiervon meist nur Kanäle mit großem Ölvolumen betroffen sind.

Die Folgen sind eine schlechte Regelung des Vorsteuerdrucks bei der Ansteuerung des Druckregelventils, mit als Folge ähnlichen bzw. noch verstärkten negativen Wirkungen bei der Einstellung des Kupplungsdrucks.

Die der Erfindung zugrunde liegende Aufgabe ist es eine hydraulische Getriebesteuerung so zu verbessern, dass die erwähnten Nachteile der bekannten Anordnungen vermieden werden. Insbesondere ist die Entleerung der Vorsteuerkanäle bzw. die Bildung von Luftausscheidungen in den Vorsteuerkanälen zu vermeiden.

Diese Aufgabe wird durch die Merkmale des Patentanspruchs 1 gelöst.

Demnach umfasst eine hydraulische Getriebesteuerung mindestens ein Druckregelventil und ein mit diesem durch eine Vorsteuerleitung verbundenes Vorsteuerventil. Des Weiteren ist ein Vorbefüllventil zur Einstellung eines Vorbefülldrucks vorgesehen, der in einem Betriebszustand, in welchem eine als Getriebeschaltelement wirksame Kupplung nicht betätigt ist, diese und die mit der Kupplung in Verbindung stehenden Leitungen beaufschlagt. Unter einer nicht betätigten Kupplung ist zu verstehen, dass diese nicht von einem Arbeitsdruck beaufschlagt wird, so dass keine Momentenübertragung erfolgen kann. Augrund des Vorbefülldrucks wird eine Entleerung der Kupplung und den mit dieser verbundenen Leitungen verhindert. Ebenso wird die Entstehung von Lufteinschlüssen in der Kupplung und besagten Leitungen vermieden. Erfindungsgemäß ist die Vorsteuerleitung ebenfalls zur Vermeidung einer Entleerung bzw. der Entstehung von Lufteinschlüssen in diesem Betriebszustand mit mindestens einer weiteren Leitung verbindbar, welche unter einem zweiten Vorbefülldruck steht.

Vorteilhafte Ausgestaltungen der Erfindung ergeben sich aus den Unteransprüchen.

In einer vorteilhaften Ausgestaltung ist der erste Vorbefülldruck höher als der zweite Vorbefülldruck.

Alternativ hierzu ist eine Ausgestaltung möglich, bei welcher der erste Vorbefülldruck und der zweite Vorbefülldruck gleich sind.

Bevorzugt ist zur Einstellung des zweiten Vorbefülldrucks ein zweites Vorbefüllventil vorgesehen.

In einer weiteren Variante ist es möglich, dass zur Einstellung des ersten Vorbefülldrucks und des zweiten Vorbefülldrucks ein gemeinsames Vorbefüllventil vorgesehen ist.

In diesem Zusammenhang sieht eine weitere Ausgestaltungsform vor, dass der erste Vorbefülldruck und der zweite Vorbefülldruck geringer sind als der Kupplungsdruck und höher sind als ein Umgebungsdruck.

Außerdem kann vorgesehen sein, dass ein Vorbefüllventil als Druckbegrenzungsventil wirksam ist und als Sitzventil ausgeführt ist.

Eine weitere Ausführung sieht vor, dass ein als Sitzventil ausgeführtes Vorbefüllventil als Kugelventil oder Plattenventil ausgebildet ist.

Alternativ hierzu ist es möglich, dass ein Vorbefüllventil als Druckminderventil wirksam und als Schieberventil ausgebildet ist.

Schließlich wird es als vorteilhaft beurteilt, dass eine von einem hydraulischen Versorgungssystem mit Betriebsmedium versorgte und vom ersten Vorbefülldruck beaufschlagte zweite und dritte Leitung mit einer vom zweiten Vorbefülldruck beaufschlagten vierten und fünften Leitung durch eine als hydraulischen Widerstand wirkende Engstelle miteinander verbunden sind. Die Engstelle kann hierbei als Drossel oder Blende ausgebildet sein.

In einer weiteren Ausgestaltung der Erfindung sind die zweite Leitung zur Vorbefüllung des Druckregelventils bzw. des Getriebeschaltelements und die vierte Leitung zur Vorbefüllung des Vorsteuerventils bzw. der Vorsteuerleitung unabhängig voneinander mit dem hydraulischen Versorgungssystem verbunden.

Außerdem ist es möglich, dass in der hydraulischen Getriebesteuerung mehrere Vorsteuerventile angeordnet sind, die mit einem gemeinsamen Vorbefüllkanal verbunden sind, wobei der zweite Vorbefülldruck in dem Vorbefüllkanal mittels eines gemeinsamen Vorbefüllventils einstellbar ist.

Alternativ hierzu ist es möglich, dass in der hydraulischen Getriebesteuerung mehrere Vorsteuerventile angeordnet sind, wobei jedem Vorsteuerventil ein Vorbefüllventil zugeordnet ist. Da diese auch mittels des Vorbefüllkanals verbunden sind, werden durch die Anordnung mehrerer Vorbefüllventile volumenstrominduzierte Staudrücke im Vorbefüllkanal vermieden.

Es kann vorgesehen sein, dass ein Temperatursensor an einem entlüftungsseitigen Raum angeordnet ist. Dieser Ort kann beispielsweise in oder an einem Federraum des Vorbefüllventils sein oder an der einem Entlüftungsraum zugewandten Seite des Ventilsitzes.

In einer weiteren Ausführung ist der Vorbefülldruck des Vorsteuerventils auf 0,1 bar begrenzt.

Bevorzugt ist die erfindungsgemäße hydraulische Getriebesteuerung in einem Getriebe für ein Kraftfahrzeug angeordnet.

Ausführungsbeispiele der Erfindung sind in den Zeichnungen dargestellt und werden im Folgenden näher beschrieben.

Es zeigen:
- Fig. 1: eine hydraulische Getriebesteuerung nach dem Stand der Technik;
- Fig. 2: eine hydraulische Getriebesteuerung mit jeweils einem Vorbefüllventil für ein Druckregelventil und ein Vorsteuerventil und

- Fig. 3: eine hydraulische Getriebesteuerung mit einem gemeinsamen Vorsteuerventil für das Druckregelventil und das Vorsteuerventil.

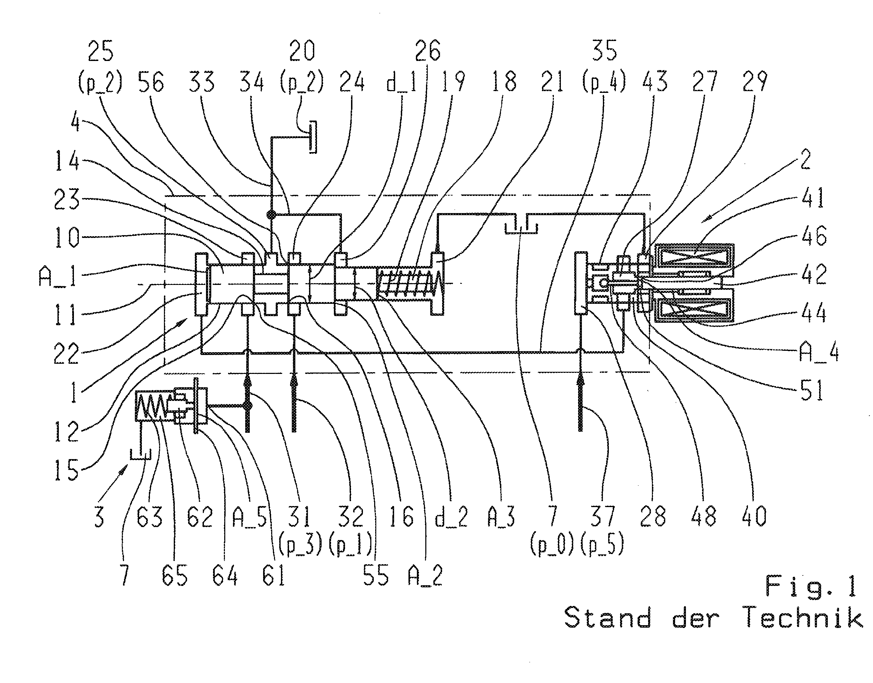

Fig. 1 zeigt eine hydraulische Getriebesteuerung 100 nach dem Stand der Technik, welche an einem Getriebegehäuse angeordnet ist. Die hydraulische Getriebesteuerung 100 umfasst ein als Druckminderventil ausgebildetes Druckregelventil 1 und ein als elektromagnetisches Proportionalventil ausgeführtes Vorsteuerventil 2. Druckregelventil 1 und Vorsteuerventil 2 sind in einem gemeinsamen Steuerungsgehäuse 4 angeordnet. Das Druckregelventil 1 umfasst unter anderem einen Ventilschieber 10, welcher in Richtung seiner Längsachse 11 beweglich in einer Ventilbohrung 12 geführt ist.

Der zylindrische Ventilschieber 10 mit einem maximalen Außendurchmesser d_1 weist an einem ersten Ende eine kreisförmige axiale Stirnfläche A_1 auf. Durch eine als Eindrehung in die zylindrische Außenkontur des Ventilschiebers 10 ausgeführte Querschnittsverringerung 14 werden zwei Steuerkanten 15 und 16 gebildet. Zu einem zweiten Ende hin ist der Durchmesser des Ventilschiebers 10 auf einen Außendurchmesser d_2 reduziert, wodurch am stufenförmigen Übergang zum Außendurchmesser d_1 eine ringförmige axiale Rückmeldefläche A_2 gebildet wird. Zu dem in der Darstellung rechten Ende des Ventilschiebers 10 hin ist dieser nochmals im Durchmesser auf eine zylindrische Außenkontur reduziert, wodurch ein zylindrischer Federführungszapfen 18 und eine axiale Ringfläche A_3 gebildet werden.

Konzentrisch um den Federführungszapfen 18 ist eine Feder 19 angeordnet, welche sich einerseits am Ventilschieber 10 an der axialen Ringfläche A_3 und mit der anderen Seite gegen die Wand eines Druckraums 21 abstützt. Hierdurch wird der Ventilschieber 10 mit der axialen Stirnfläche A_1 gegen die Wand eines Druckraumes 22 vorgespannt, wenn sich das System im ausgeschalteten Zustand befindet, bzw. der Druckraum 22 drucklos ist. Der Druckraum 21 ist entlüftet. Unter den Begriffen "Entlüftung" oder "entlüften" ist eine Verbindung des betreffenden Druckraumes oder der jeweilgen Leitung mit einem von einem Umgebungsdruck p_0 beaufschlagten Entlüftungsraum 7 zu verstehen, so dass in dem betreffenden Druckraum auch der Umgebungsdruck p_0 herrscht. Neben den Druckräumen 21 und 22 wird die Ventilbohrung 12 von vier weiteren Druckräumen 23, 24, 25 und 26 durchdrungen. Der Druckraum 24 wird durch eine Leitung 32 von einem Systemdruck p_1 beaufschlagt. Der Systemdruck p_1 ist der höchste Druck in dem hydraulischen System und wird von einem zentralen Versorgungssystem des Betriebsmediums eingestellt.

Unter einer Leitung ist eine jegliche Innenkontur zu verstehen, welche ein flüssiges oder gasförmiges Arbeitsmedium leiten kann, wie beispielsweise ein in einem Gehäuse ausgebildeter Kanal, eine separate Rohr- oder Schlauchverbindung oder auch nur eine verbindende Öffnung zwischen hydraulischen oder pneumatischen Komponenten.

Der Druckraum 23 wird durch eine Leitung 31 mit einem Vorbefülldruck p_3 beaufschlagt, der deutlich unter dem Systemdruck p_1 und, bevorzugterweise, geringfügig über dem Umgebungsdruck p_0 liegt.

Zwischen dem Druckraum 23 und dem Druckraum 24 ist ein Druckraum 25 ausgebildet, welcher mittels einer Leitung 33 mit einem Verbraucher, in diesem Falle einer als Getriebeschaltelement wirksamen Kupplung 20, verbunden ist. Die Kupplung 20 wird von einem Kupplungsdruck p_2 beaufschlagt, welcher mittels des Druckregelventils 1 eingestellt wird und maximal die Höhe des Systemdrucks p_1 annehmen kann. Eine Leitung 34, welche von der Leitung 33 abzweigt, ist mit einem Druckraum 26 verbunden, so dass die Rückmeldefläche A_2 von dem zu regelnden Kupplungsdruck p_2 beaufschlagt wird und damit die zu einer Druckregelung erforderliche Rückmeldung des zu regelnden Drucks gegeben ist.

Die Aufgabe der vorliegenden Getriebesteuerung ist die Einstellung bzw. Veränderung des Kupplungsdruckes p_2, beispielsweise in Abhängigkeit eines zu übertragenden Kupplungsmoments oder zur Veränderung des Kupplungsdrucks p_2 über der Zeit, wie dies beispielsweise bei Schaltvorgängen gewünscht wird. Diese Veränderung des Kupplungsdrucks p_2 wird bei dem beschriebenen System mittels einer Veränderung eines Vorsteuerdruckes p_4 im Druckraum 22 erreicht. Die Einstellung des Vorsteuerdrucks p_4 ist die Aufgabe des Vorsteuerventils 2.

Das Vorsteuerventil 2 besteht aus einem Ventilgehäuse 40, einem mit dem Ventilgehäuse 40 verbundenen Elektromagneten 41 und einem Vorsteuerkolben 42, wobei das Ventilgehäuse 40 in einer Aufnahmebohrung 43 angeordnet ist. Der Vorsteuerkolben 42 ist in einer Führungsbohrung 44 längsbeweglich angeordnet und weist zwei unterschiedliche Durchmesser auf, wodurch eine Rückmeldefläche A_4 und eine Steuerkante 46 gebildet werden. Die Aufnahmebohrung 43 ist von einem Druckraum 27, einem Druckraum 28 und einem Druckraum 29 durchdrungen. Der Druckraum 28 wird durch eine Leitung 37 mit dem Betriebsmedium versorgt und von einem Reduzierdruck p_5 beaufschlagt. Der Reduzierdruck p_5 ist geringer als der Systemdruck p_1 und größer oder gleich dem Vorsteuerdruck p_4.

Im Betrieb des hydraulischen Systems wirkt in dem Vorsteuerventil 2 eine elektromagnetische Kraft auf den Vorsteuerkolben 42. Die Größe der elektromagnetischen Kraft ist eine Funktion eines elektrischen Stroms, der den Elektromagneten 41 durchfließt. Hierdurch stellt sich ein Kräftegleichgewicht an dem Vorsteuerkolben 42 ein, welcher eine Stellung einnimmt, in der er mit einer Innenkontur des Ventilgehäuses 40 einen Drosselspalt 48 zwischen dem Druckraum 28 und dem Druckraum 27 bildet. Das Betriebsmedium, welches im Druckraum 28 unter dem Reduzierdruck p_5 steht, strömt durch den Drosselspalt 48 in den Druckraum 27, wodurch aufgrund der Strömungsverluste im Drosselspalt 48 der Druck im Druckraum 27 auf den Vorsteuerdruck p_4 absinkt. Der Vorsteuerdruck p_4 wirkt auf die Rückmeldefläche A_4, woraus sich eine Rückmeldekraft ergibt. An dem Vorsteuerkolben 42 stellt sich somit ein Kräftegleichgewicht aus hydraulischen und elektromagnetischen Kräften ein, welches die Größe des Drosselspalts 48 und damit die Höhe des Vorsteuerdrucks p_4 bestimmt. Durch diesen Regelvorgang bleibt der Vorsteuerdruck p_4 für einen konstant eingestellten Stromwert konstant. Soll der Vorsteuerdruck p_4 reduziert werden, wird der Vorsteuerkolben 42 mittels einer Verringerung der elektromagnetischen Kraft durch eine geringere Stromzufuhr nach rechts verschoben, wodurch sich ein Drosselspalt 51 erweitert, durch welchen ein Teil des Betriebsmediums in den entlüfteten Druckraum 29 abfließen kann.

Durch eine Vorsteuerleitung 35 ist der der Druckraum 27 mit dem Druckraum 22 verbunden, so dass der Vorsteuerdruck p_4 auch auf die axiale Stirnfläche A_1 wirkt. Hierdurch entsteht eine hydraulische Kraft welche entgegen der Federkraft von der Feder 19 und der Rückmeldekraft an der Rückmeldefläche A_2 wirkt. Ab einer gewissen Höhe des Vorsteuerdrucks p_4 übersteigt die hydraulische Kraft die Vorspannkraft der Feder 19 und der Ventilschieber 10 wird nach rechts verschoben. Hierdurch trennt der Ventilschieber 10 an der Steuerkante 15 den Druckraum 23 von dem Druckraum 25. Vor der Unterbrechung entsprach der Kupplungsdruck p_2 dem Vorbefülldruck p_3. Wird der Ventilschieber 10 nach rechts verschoben, bilden aufgrund dessen Lage die Steuerkante 16 und eine Gehäusekante 56 einen Drosselspalt, durch den die Druckräume 24 und 25 miteinander verbunden sind. Das Betriebsmedium, welches in der Leitung 32 und dem Druckraum 24 unter dem Systemdruck p_1 steht, strömt nun durch den Drosselspalt und gelangt durch den Druckraum 25 in die Leitung 33 und damit in die Kupplung 20, wo sich nun der Kupplungsdruck p_2 über das Gleichgewicht von Federkraft, Rückmeldekraft und Vorsteuerkraft am Ventilschieber 10 einstellt. Sollte sich der Kupplungsdruck p_2 beispielsweise durch Störungen an der Kupplung 20 erhöhen, wirkt dieser auf die Rückmeldefläche A_2 und verschiebt den Ventilschieber 10 nach links, wodurch sich der Drosselspalt zwischen Steuerkante 16 und Gehäusekante 56 verkleinert und ein zweiter Drosselspalt zwischen Steuerkante 15 und Gehäusekante 55 vergrößert, so dass der Systemdruck p_1 abgedrosselt wird. Damit nimmt auch der Kupplungsdruck p_2 wieder ab und stellt sich auf einen gewünschten Sollwert ein. Bei einer Verringerung des Kupplungsdrucks p_2 durch Vorgänge an der Kupplung sinkt die Rückmeldekraft und der Ventilschieber 10 verschiebt sich in umgekehrter Weise. Wird nun mittels des Vorsteuerventils 2 der Vorsteuerdruck p_4 erhöht, verschiebt sich das Gleichgewicht am Ventilschieber 10 durch die nun vergrößerte Vorsteuerkraft zu einem höheren Kupplungsdruck p_2.

Im ausgeschalteten Zustand der hydraulischen Getriebesteuerung 100 bzw. der Kupplung 20 liegt wie oben beschrieben der Ventilschieber 10 mit der axialen Stirnfläche A_1 an der Wand des Druckraumes 22 an. In dieser Position ist der vom Systemdruck p_1 beaufschlagte Druckraum 24 vom Druckraum 25 getrennt und der Druckraum 23 mit dem Druckraum 25 und damit der Kupplung 20 verbunden. Wäre der Druckraum 23 entlüftet, würden der Druckraum 25 sowie die Leitung 33 und damit die Kupplung 20 im ausgeschalteten und damit drucklosen Zustand leer laufen. Ebenso könnten sich Luftausscheidungen aus dem Betriebsmedium bilden. Hierdurch würden sich beispielsweise bei der Zuschaltung der Kupplung 20 die Zeit zum Befüllen der Kupplung und damit der Druckaufbau in der Kupplung 20 bzw. die Schaltzeiten in nachteiliger Weise verlängern. Ebenso würde sich die Regelgüte einer Druckrampe (Kupplungsdruck über der Zeit) verschlechtern.

Diese Luftausscheidungen unterliegen erheblichen Streuungen und Wechselwirkungen, die mittels der Getriebesoftware nur unzureichend in Form eines Modells abgebildet bzw. bei der Ansteuerung der Schaltelemente berücksichtigt werden können.

Um die genannten nachteiligen Effekte zu vermeiden wird der Druckraum 23 durch eine Leitung 31 von einem Vorbefülldruck p_3 beaufschlagt. Hierdurch wird eine Luftausscheidung aus dem Betriebsmedium oder ein Leerlaufen der Kupplung 20 bzw. der Druckräume 24 und 25 sowie der Leitungen 33 und 34 verhindert.

In einem Automatgetriebe sind mehrere Kupplungen angeordnet und der Kupplungsdruck wird jeweils von einem Druckregelventil mit einem zugehörigen Vorsteuerventil eingestellt, so dass mehrere Druckregelventile und Vorsteuerventile vorhanden sind. Die Druckräume 23 aller Druckregelventile sind durch die Leitung 31 miteinander verbunden.

Der Vorbefülldruck p_3 ist nach oben mittels eines Vorbefüllventils 3 begrenzt, wobei dieses durch einen Anschluss 61 mit der Leitung 31 verbunden ist. Das Vorbefüllventil 3 ist als Druckbegrenzungsventil wirksam und als Sitzventil ausgeführt. Es besteht aus einem Kolben 62, der von der Vorspannkraft einer Feder 63 gegen einen Ventilsitz 64 gedrückt wird. Da die Planfläche des Kolbens 62 den Ventilsitz 64 wie eine Platte abdeckt, bezeichnet man diese Bauweise eines Sitzventils auch als Plattenventil. Die Vorspannkraft der Feder 63 bestimmt in Verbindung mit einer vom Vorbefülldruck p_3 beaufschlagten Ventilsitzfläche A_5 die maximale Höhe des Vorbefülldrucks p_3. Ein Federraum 65 auf der dem Anschluss 61 abgewandten Seite des Kolbens 62 ist entlüftet. Es wäre auch denkbar, ein Vorbefüllventil als Druckminderventil auszuführen.

Die vom Vorsteuerdruck p_4 beaufschlagbaren Leitungen befinden sich üblicherweise in dem Steuerungsgehäuse 4. Durch die Einbaulage des Steuerungsgehäuses 4 unterhalb des Flüssigkeitsspiegels des Betriebsmediums im Getriebegehäuse ist somit ein Leerlaufen der Leitungen infolge der Schwerkraft ausgeschlossen und es ergeben sich lediglich Luftabscheidungen, die im Neuzustand bei der Montage der hydraulischen Steuerung eingeschlossen werden.

In Steuerungen, die oberhalb des Flüssigkeitsspiegels des im Getriebegehäuse bevorrateten Betriebsmediums angeordnet sind, stellt sich jedoch das Problem, dass ein Leerlaufen der vom Vorsteuerdruck p_4 beaufschlagbaren Leitungen, wie beispielsweise bei der Vorsteuerleitung 35, erfolgt. Dies geschieht insbesondere im Stillstand des Getriebes, wenn eine Getriebepumpe kein Betriebsmedium in die hydraulische Steuerung fördert und somit keinen Druck erzeugt. Zusätzlich zeigt sich bei längerer Nichtbetätigung des Vorsteuerventils 2, dass sich Luft auch dann in den Leitungen abscheidet, wenn sich die Getriebepumpe in Betrieb befindet, wobei hiervon allerdings nur Leitungen mit großem Volumen bzw. großen hydraulischen Durchmessern betroffen sind.

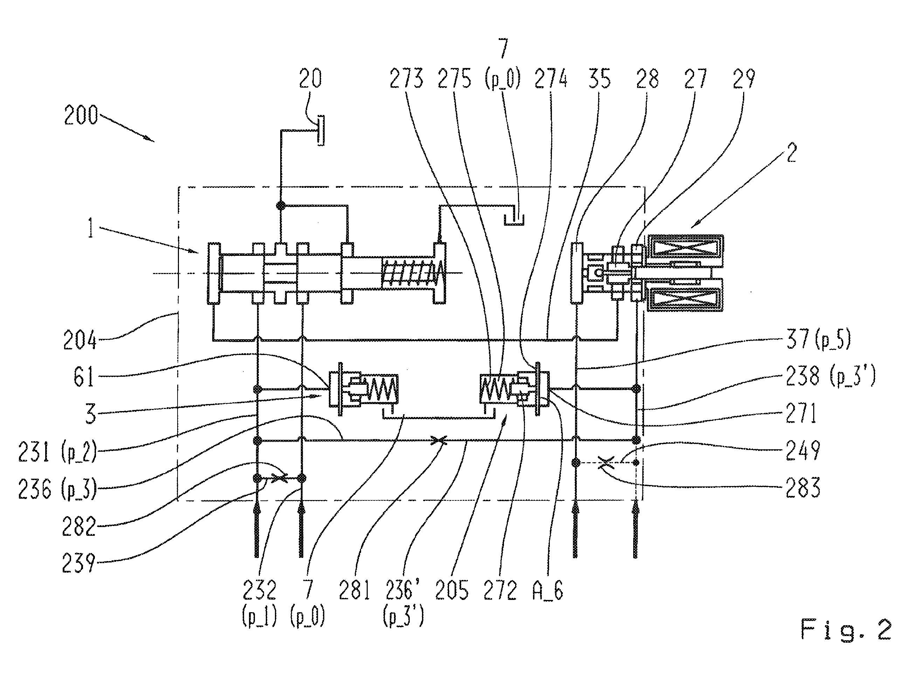

Fig. 2 zeigt eine erfindungsgemäße hydraulische Getriebesteuerung 200, welche das unter Fig. 1 beschriebene Problem des Leerlaufens der Vorsteuerleitung 35 löst. Hierbei ist an dem Vorsteuerventil 2 der Druckraum 29 nicht wie beim Stand der Technik unter Fig. 1 entlüftet, sondern durch drei Leitungen 236, 236' und 238 mit einer Leitung 231, welche von dem Vorbefülldruck p_3 beaufschlagt ist, verbunden. Der Vorbefülldruck p_3 ist wie unter Fig. 1 mittels des Vorbefüllventils 3 nach oben begrenzt. Das Vorbefüllventil 3 ist durch einen Anschluss 61 mit der Leitung 231 verbunden und wie unter Fig. 1 beschrieben aufgebaut.

Zwischen den Leitungen 236 und 236' ist eine als Blende oder Drossel ausgeführte Engstelle 281 ausgebildet. Aufgrund der hydraulischen Verluste in der Engstelle 281 stellt sich in den Leitungen 236' und 238 sowie in dem Druckraum 29 ein Vorbefülldruck p_3' ein, der kleiner ist als der Vorbefülldruck p_3. Mit der Leitung 238 ist durch einen Anschluss 271 ein Vorbefüllventil 205 verbunden, welches in dem Steuerungsgehäuse 204 ausgebildet ist und einen plattenförmigen Kolben 272, eine Feder 273 und einen Ventilsitz 274 umfasst. Ein Federraum 275 ist entlüftet. Ebenso wie das Vorbefüllventil 3 ist das Vorbefüllventil 205 als Sitzventil ausgebildet und wirkt als Druckbegrenzungsventil. Der Ventilsitz kann alternativ hierzu auch von einer Kugel verschlossen werden. Die Vorspannung des den Ventilsitz verschließenden Körpers kann außer durch die Federkraft einer Feder bei einer geeigneten räumlichen Anordnung auch durch Schwerkraft erfolgen. Da der am Vorbefüllventil 205 einzustellende Vorbefülldruck p_3' kleiner ist als der Vorbefülldruck p_3 an dem Vorbefüllventil 3, ist die Federrate bzw. die Vorspannung der Feder 273 und/oder die Ventilsitzfläche A_6 entsprechend gewählt. Es wäre auch denkbar, das Vorbefüllventil 205 als Druckminderventil auszuführen.

Aufgrund des gegenüber dem Vorbefülldruck p_3 geringeren Vorbefülldrucks p_3' ist es vorteilhafterweise möglich, den Vorsteuerdruck p_4 weiter abzusenken und damit diesen in einem größeren Druckbereich zu verändern.

Im ausgeschalteten Zustand der hydraulischen Getriebesteuerung 200 ist der Elektromagnet 41 stromlos, wodurch der Vorsteuerkolben 42 nach rechts bewegt und der Drosselspalt 51 größer wird. Hierdurch sind die Druckräume 27 und 29 miteinander verbunden, so dass die Vorsteuerleitung 35 von dem Vorbefülldruck p_3' beaufschlagt wird, was ein Leerlaufen der Vorsteuerleitung 35 oder die Bildung von Luftausscheidungen in dieser verhindert.

Somit wird der Vorbefülldruck p_3' von dem Vorbefüllventil 205 und der Vorbefülldruck p_3 wie unter Fig. 1 von dem Vorbefüllventil 3 begrenzt.

Die vom Systemdruck p_1 beaufschlagte Leitung 232 ist durch eine Leitung 239, in welcher eine als Blende oder Drossel ausgeführte Engstelle 282 angeordnet ist, mit der Leitung 231 verbunden. Aufgrund der Druckverluste an der Engstelle 282 wird der Systemdruck p_1 auf den Vorbefülldruck p_3 in der Leitung 231 reduziert.

Ein derartiger Aufbau ist als Alternative auch zwischen den Leitungen 37 und 238 denkbar, was mit unterbrochenen Linien gezeigt ist. Die unterbrochenen Linien stellen eine Leitung 249 sowie die verlängerte Leitung 238 dar, wobei die Leitung 249 die Leitung 37 mit der Leitung 238 verbindet. In der Leitung 249 ist eine als Drossel oder Blende ausgeführte Engstelle 283 angeordnet. Die Leitungen 236 und 236' sowie die Engstelle 281 können bei dieser Alternative entfallen.

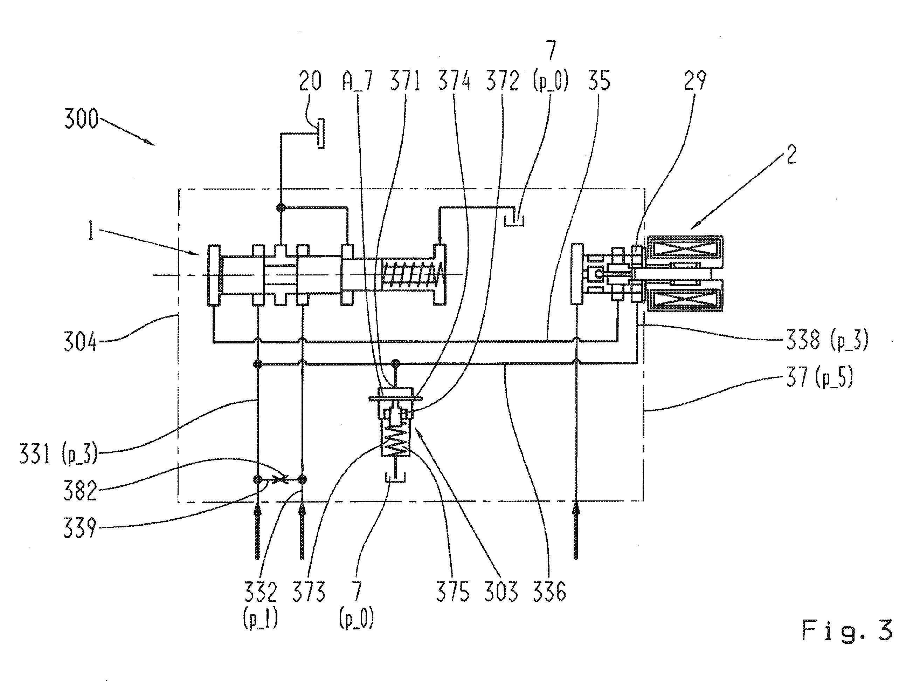

Fig. 3 zeigt eine weitere Ausgestaltung einer hydraulischen Getriebesteuerung 300. Hierbei ist eine Leitung 331 durch eine Leitung 336 mit dem Druckraum 29 verbunden. In der Leitung 336 ist im Gegensatz zur Leitung 236 in Fig. 2 keine Engstelle angeordnet, so dass der Vorbefülldruck p_3 in der Leitung 331 gleich dem Vorbefülldruck p_3' in der Leitung 338 und dem Druckraum 29 ist. Ein als Druckbegrenzungsventil wirksames Vorbefüllventil 303 ist in einem Steuerungsgehäuse 304 angeordnet und durch einen Anschluss 371 mit der Leitung 336 verbunden, welche unter dem Vorbefülldruck p_3 = p_3' steht. Es ist als Sitzventil ausgeführt und wirkt als Druckbegrenzungsventil. Das Vorbefüllventil 303 besteht analog zu den Vorbefüllventilen 3 und 205 in Fig. 1 und Fig. 2 aus einem Kolben 372, einer Feder 373, einem Ventilsitz 374 und einem Federraum 375. Der Vorbefülldruck p_3 = p_3' beaufschlagt den Kolben 372 über eine Ventilsitzfläche A_7. Eine Ausgestaltung als Schieberventil wäre auch denkbar. Außerdem könnte das Vorbefüllventil auch als Druckminderventil ausgebildet sein. Somit wird vorteilhafterweise der Vorbefülldruck p_3 = p_3' sowohl für das Druckregelventil 1 als auch das Vorsteuerventil 2 mit nur einem Vorbefüllventil nach oben begrenzt. Analog zu Fig. 2 ist die vom Systemdruck p_1 beaufschlagte Leitung 332 durch eine Leitung 339, in welcher eine als Blende oder Drossel ausgeführte Engstelle 382 angeordnet ist, mit der Leitung 331 verbunden.

### Bezugszeichen

- 1: Druckregelventil
- 2: Vorsteuerventil
- 3: Vorbefüllventil
- 4: Steuerungsgehäuse
- 7: Entlüftungsraum (p_0)
- 10: Ventilschieber
- 11: Längsachse
- 12: Ventilbohrung
- 14: Querschnittsverringerung
- 15: Steuerkante
- 16: Steuerkante
- 18: Federführungszapfen
- 19: Feder
- 20: Kupplung
- 21: Druckraum
- 22: Druckraum
- 23: Druckraum
- 24: Druckraum
- 25: Druckraum
- 26: Druckraum
- 27: Druckraum
- 28: Druckraum
- 29: Druckraum
- 31: Leitung
- 32: Leitung
- 33: Leitung
- 34: Leitung
- 35: Vorsteuerleitung
- 37: Leitung
- 40: Ventilgehäuse
- 41: Elektromagnet
- 42: Vorsteuerkolben
- 43: Aufnahmebohrung
- 44: Führungsbohrung
- 46: Steuerkante
- 48: Drosselspalt
- 51: Drosselspalt
- 55: Gehäusekante
- 56: Gehäusekante
- 61: Anschluss
- 62: Kolben
- 63: Feder
- 64: Ventilsitz
- 65: Federraum
- 100: hydraulische Getriebesteuerung
- 200: hydraulische Getriebesteuerung
- 204: Steuerungsgehäuse
- 205: Vorbefüllventil
- 231: Leitung
- 232: Leitung
- 236: Leitung
- 236': Leitung
- 238: Leitung
- 239: Leitung
- 249: Leitung
- 271: Anschluss
- 272: Kolben
- 273: Feder
- 274: Ventilsitz
- 275: Federraum
- 281: Engstelle
- 282: Engstelle
- 283: Engstelle
- 300: hydraulische Getriebesteuerung
- 303: Vorbefüllventil
- 304: Steuerungsgehäuse
- 331: Leitung
- 332: Leitung
- 336: Leitung
- 338: Leitung
- 339: Leitung
- 371: Anschluss
- 372: Kolben
- 373: Feder
- 374: Ventilsitz
- 375: Federraum
- 382: Engstelle

- A_1: Stirnfläche
- A_2: Rückmeldefläche
- A_3: Ringfläche
- A_4: Rückmeldefläche
- A_5: Ventilsitzfläche
- A_6: Ventilsitzfläche
- A_7: Ventilsitzfläche
- d_1: Außendurchmesser
- d_2: Außendurchmesser
- p_0: Umgebungsdruck
- p_1: Systemdruck
- p_2: Kupplungsdruck
- p_3: Vorbefülldruck
- p_3': Vorbefülldruck
- p_4: Vorsteuerdruck
- p_5: Reduzierdruck

## Patentansprüche

1. Hydraulische Getriebesteuerung, umfassend mindestens ein Druckregelventil (1) und ein mit diesem durch eine Vorsteuerleitung (35) verbundenen Vorsteuerventil (2), sowie ein Vorbefüllventil (3, 303) zur Einstellung eines Vorbefülldrucks p_3 zur Vermeidung einer Entleerung einer Kupplung (20) und mit dieser in Verbindung stehenden Leitungen (231, 331) im nicht betätigten Betriebszustand, **dadurch gekennzeichnet, dass** die Vorsteuerleitung (35) zur Vermeidung einer Entleerung dieser in dem Betriebszustand, in welchem die Kupplung (20) nicht betätigt ist, mit mindestens einer unter einem zweiten Vorbefülldruck p_3 stehenden Leitung (236', 238, 336, 338) verbunden ist

2. Hydraulische Getriebesteuerung nach Anspruch 1, **dadurch gekennzeichnet, dass** der erste Vorbefülldruck p_3 höher ist als der zweite Vorbefülldruck p_3'.

3. Hydraulische Getriebesteuerung nach Anspruch 1, **dadurch gekennzeichnet, dass** der erste Vorbefülldruck p_3 und der zweite Vorbefülldruck p_3 gleich sind.

4. Hydraulische Getriebesteuerung nach einem der Ansprüche 1 bis 3, **dadurch gekennzeichnet, dass** zur Einstellung des zweiten Vorbefülldrucks p_3' ein zweites Vorbefüllventil (205) vorgesehen ist.

5. Hydraulische Getriebesteuerung nach Anspruch 3, **dadurch gekennzeichnet, dass** zur Einstellung des ersten Vorbefülldrucks p_3 und des zweiten Vorbefülldrucks p_3' eines gemeinsames Vorbefüllventil (303) vorgesehen ist.

6. Hydraulische Getriebesteuerung nach einem der Ansprüche 1 bis 5, **dadurch gekennzeichnet, dass** der erste Vorbefülldruck p-3 und der zweite Vorbefülldruck p_3' geringer sind als ein Kupplungsdruck p_2 zur Betätigung der Kupplung (20) und höher sind als ein Umgebungsdruck p_0.

7. Hydraulische Getriebesteuerung nach einem der Ansprüche 1, 4 oder 5, **dadurch gekennzeichnet, dass** ein Vorbefüllventil (3, 205, 303) als Druckbegrenzungsventil wirksam ist und als Sitzventil ausgeführt ist.

8. Hydraulische Getriebesteuerung nach Anspruch 7, **dadurch gekennzeichnet, dass** ein als Sitzventil ausgeführtes Vorbefüllventil (3, 205, 303) als Plattenventil ausgebildet ist.

9. Hydraulische Getriebesteuerung nach einem der Ansprüche 1, 4 oder 5, **dadurch gekennzeichnet, dass** ein Vorbefüllventil (3, 205, 303) als Druckminderventil wirksam ist und als Schieberventil ausgebildet ist.

10. Hydraulische Getriebesteuerung nach Anspruch 2, **dadurch gekennzeichnet, dass** eine von einem hydraulischen Versorgungssystem mit einem Betriebsmedium versorgte und vom ersten Vorbefülldruck p_3 beaufschlagte erste (231) und zweite Leitung (236) mit einer vom zweiten Vorbefülldruck p_3' beaufschlagten dritten Leitung (238) und vierten Leitung (236') durch eine als hydraulischen Widerstand wirkende Engstelle (281) miteinander verbunden sind.

11. Hydraulische Getriebesteuerung nach Anspruch 4, **dadurch gekennzeichnet, dass** die erste Leitung (231, 331) zur Vorbefüllung des Druckregelventils (1) bzw. der Kupplung (20) und die dritte Leitung (238, 338) zur Vorbefüllung des Vorsteuerventils (2) bzw. der Vorsteuerleitung (35) unabhängig voneinander mit einem hydraulischen Versorgungssystem verbunden sind.

12. Hydraulische Getriebesteuerung nach Anspruch 1, **dadurch gekennzeichnet, dass** in dieser mehrere Vorsteuerventile (2) angeordnet sind, die mit einem gemeinsamen Vorbefüllkanal verbunden sind, wobei der Vorbefülldruck p_3' in dem Vorbefüllkanal mittels eines gemeinsamen Vorbefüllventils (205, 303) für alle Vorsteuerventile (2) einstellbar ist.

13. Hydraulische Getriebesteuerung nach Anspruch 1, **dadurch gekennzeichnet, dass** in dieser mehrere Vorsteuerventile (2) angeordnet sind, wobei jedem Vorsteuerventil (2) ein Vorbefüllventil (205, 303) zugeordnet ist.

14. Getriebe für ein Kraftfahrzeug mit einer hydraulischen Getriebesteuerung nach Anspruch 1.

## Claims

1. Hydraulic transmission controller comprising at least one pressure regulating valve (1) and a pilot control valve (2) connected thereto by a pilot control line (35), and also comprising a prefill valve (3, 303) for setting a prefill pressure p_3 for preventing emptying of a clutch (20), and of lines (231, 331) connected thereto, in the non-actuated operating state, **characterized in that** the pilot control line (35), to prevent emptying thereof in the operating state in which the clutch (20) is not actuated, is connected to at least one line (236', 238, 336, 338) which is at a second prefill pressure p_3'.

2. Hydraulic transmission controller according to Claim 1, **characterized in that** the first prefill pressure p_3 is higher than the second prefill pressure p_3'.

3. Hydraulic transmission controller according to Claim 1, **characterized in that** the first prefill pressure p_3 and the second prefill pressure p_3' are equal.

4. Hydraulic transmission controller according to one of Claims 1 to 3, **characterized in that** a second prefill valve (205) is provided for setting the second prefill pressure p_3'.

5. Hydraulic transmission controller according to Claim 3, **characterized in that** a common prefill valve (303) is provided for setting the first prefill pressure p_3 and the second prefill pressure p_3'.

6. Hydraulic transmission controller according to one of Claims 1 to 5, **characterized in that** the first prefill pressure p_3 and the second prefill pressure p_3' are lower than a clutch pressure p_2 for the actuation of the clutch (20) and higher than an ambient pressure p_0.

7. Hydraulic transmission controller according to one of Claims 1, 4 or 5, **characterized in that** a prefill valve (3, 205, 303) acts as a pressure limiting valve and is designed as a seat valve.

8. Hydraulic transmission controller according to Claim 7, **characterized in that** a prefill valve (3, 205, 303) designed as a seat valve is formed as a plate valve.

9. Hydraulic transmission controller according to one of Claims 1, 4 or 5, **characterized in that** a prefill valve (3, 205, 303) acts as a pressure reduction valve and is formed as a slide valve.

10. Hydraulic transmission controller according to Claim 2, **characterized in that** a first (231) and a second line (236) to which an operating medium is supplied by a hydraulic supply system and which are charged with the first prefill pressure p_3 are connected to a third line (238) and a fourth line (236'), which are charged with the second prefill pressure p_3', by a constriction (281) which acts as a hydraulic resistance.

11. Hydraulic transmission controller according to Claim 4, **characterized in that** the first line (231, 331) for the prefilling of the pressure regulating valve (1) or the clutch (20) and the third line (238, 338) for the prefilling of the pilot control valve (2) or the pilot control line (35) are connected independently of one another to a hydraulic supply system.

12. Hydraulic transmission controller according to Claim 1, **characterized in that** there are arranged therein a plurality of pilot control valves (2) which are connected to a common prefill duct, wherein the prefill pressure p_3' in the prefill duct can be set by means of a common prefill valve (205, 303) for all pilot control valves (2).

13. Hydraulic transmission controller according to Claim 1, **characterized in that** there are arranged therein a plurality of pilot control valves (2), wherein each pilot control valve (2) is assigned a prefill valve (205, 303).

14. Transmission for a motor vehicle having a hydraulic transmission controller according to Claim 1.

## Revendications

1. Commande de boîte de vitesse hydraulique, comprenant au moins une soupape de régulation de la pression (1) et une soupape pilote (2) connectée à celle-ci par une conduite pilote (35), ainsi qu'une soupape de pré-remplissage (3, 303) pour l'ajustement d'une pression de pré-remplissage p_3 afin d'éviter une vidange d'un embrayage (20) et de conduites (231, 331) en liaison avec celui-ci dans l'état de fonctionnement non activé, **caractérisée en ce que** la conduite pilote (35), pour éviter une vidange de cette dernière dans l'état de fonctionnement dans lequel l'embrayage (20) n'est pas activé, est connectée à au moins une conduite (236', 238, 336, 338) soumise à une deuxième pression de pré-remplissage p_3'.

2. Commande de boîte de vitesse hydraulique selon la revendication 1, **caractérisée en ce que** la première pression de pré-remplissage p_3 est supérieure à la deuxième pression de pré-remplissage p_3'.

3. Commande de boîte de vitesse hydraulique selon la revendication 1, **caractérisée en ce que** la première pression de pré-remplissage p_3 et la deuxième pression de pré-remplissage p_3' sont identiques.

4. Commande de boîte de vitesse hydraulique selon l'une quelconque des revendications 1 à 3, **caractérisée en ce que** pour l'ajustement de la deuxième pression de pré-remplissage p_3', il est prévu une deuxième soupape de pré-remplissage (205).

5. Commande de boîte de vitesse hydraulique selon la revendication 3, **caractérisée en ce que** pour l'ajustement de la première pression de pré-remplissage p_3 et de la deuxième pression de pré-remplissage p_3', il est prévu une soupape de pré-remplissage commune (303).

6. Commande de boîte de vitesse hydraulique selon l'une quelconque des revendications 1 à 5, **caractérisée en ce que** la première pression de pré-remplissage p_3 et la deuxième pression de pré-remplissage p_3' sont inférieures à une pression d'embrayage p_2 pour l'actionnement de l'embrayage (20) et supérieures à une pression ambiante p_0.

7. Commande de boîte de vitesse hydraulique selon l'une quelconque des revendications 1, 4 ou 5, **caractérisée en ce qu'**une soupape de pré-remplissage (3, 205, 303) est active en tant que soupape de limitation de la pression et est réalisée sous forme de soupape à siège.

8. Commande de boîte de vitesse hydraulique selon la revendication 7, **caractérisée en ce qu'**une soupape de pré-remplissage (3, 205, 303) réalisée sous forme de soupape à siège est réalisée sous forme de soupape à plaque.

9. Commande de boîte de vitesse hydraulique selon l'une quelconque des revendications 1, 4 ou 5, **caractérisée en ce qu'**une soupape de pré-remplissage (3, 205, 303) est active en tant que soupape de réduction de la pression et est réalisée sous forme de soupape à tiroir.

10. Commande de boîte de vitesse hydraulique selon la revendication 2, **caractérisée en ce qu'**une première (231) et deuxième (236) conduite alimentée par un système d'alimentation hydraulique en fluide de travail et sollicitée par une première pression de pré-remplissage p_3 sont connectées à une troisième conduite (238) et une quatrième conduite (236') sollicitées par une deuxième pression de pré-remplissage p_3' par un étranglement (281) agissant en tant que résistance hydraulique.

11. Commande de boîte de vitesse hydraulique selon la revendication 4, **caractérisée en ce que** la première conduite (231, 331) pour le pré-remplissage de la soupape de régulation de la pression (1) ou de l'embrayage (20) et la troisième conduite (238, 338) pour le pré-remplissage de la soupape pilote (2) ou de la conduite pilote (35) sont connectées indépendamment l'une de l'autre à un système d'alimentation hydraulique.

12. Commande de boîte de vitesse hydraulique selon la revendication 1, **caractérisée en ce que** plusieurs soupapes pilotes (2) sont disposées dans celle-ci, lesquelles sont connectées à un canal de pré-remplissage commun, la pression de pré-remplissage p_3' dans le canal de pré-remplissage pouvant être ajustée au moyen d'une soupape de pré-remplissage commune (205, 303) pour toutes les soupapes pilotes (2).

13. Commande de boîte de vitesse hydraulique selon la revendication 1, **caractérisée en ce que** plusieurs soupapes pilotes (2) sont disposées dans celle-ci, une soupape de pré-remplissage (205, 303) étant associée à chaque soupape pilote (2).

14. Transmission pour un véhicule automobile comprenant une commande de boîte de vitesse hydraulique selon la revendication 1.
